# EUROPEAN PATENT APPLICATION

(11) **EP 1 128 164 A1**
(43) Date of publication of application: **29.08.2001**
(21) Application number: 01301749.6
(22) Date of filing: 26.02.2001
(51) Int. Cl.: G01D 3/08

(54) **Apparatus and method for sensor detection**

(30) Priority: 24.02.2000 US 184674 P
(71) Applicant: ENDEVCO CORPORATION, San Juan Capistrano, California 92675 (US)
(72) Inventor: GenKuong, Fernando F., Laguna Niguel, California 92677 (US)
(74) Representative: Greenwood, John David

(57) **Abstract**

Apparatus for detecting presence of a sensor (10) includes a signal source for providing an excitation signal for the sensor (10). A detector circuit (40) detects a response signal from the sensor (10) in response to the excitation signal for presence detection. A switch (SW1) is responsive to a control signal for switching between a first switch state for coupling the signal source to the sensor (10) and a second switch state for coupling the detector circuit (40) to the sensor (10). A controller (26) provides the control signal and analyzes the detected response signal. The excitation signal can be a chirp signal that spans a range of frequencies. First and second tests of the sensor(10) are conducted with the presence of the sensor (10) determined from the first and second tests. Parameters of the detection including gain can be changed for the first and second tests to provide a more accurate test result.

## Description

### BACKGROUND

Sensors are used to measure different types of phenomena such as temperature, acceleration, pressure and flow and convert these phenomena to analog voltages. In the manufacturing of large structures, extensive testing routines are employed in which hundreds and even thousands of sensors arc deployed throughout the structure. In a typical test configuration, each sensor is coupled through a signal conditioner to a data acquisition and analysis system. Modal analysis and the factory environment are other applications in which a multitude of distributed sensors is typically deployed with each sensor individually and separately connected to a data acquisition and analysis system.

Test labs that use a large number of sensors prefer to verify that all of the sensors are indeed connected to the signal conditioners before initiating testing routines. Money can be wasted if a costly test is performed and then has to be duplicated because it is later learned that the sensors were not connected to the signal conditioners. A known technique for verification includes having one person tap each sensor that is located some distance (e.g., 50 to 100 meters) away from the signal conditioner, and having a second person verify that a signal is detected at the output of each signal conditioner. This manual approach is very slow and prone to human errors. Another verification technique uses signal conditioners that are adapted to measure the combined cable and sensor shunt capacitance present at the input of the signal conditioner. This latter approach is not fully automated because one needs to know the capacitance of the cable in order to assess the presence of the sensor. It is also difficult to reliably conclude that the sensor is connected to the cable for cases in which the cable capacitance is much larger than the sensor capacitance. Another weakness of this approach is that it does not work with grounded sensors.

### SUMMARY

There remains a continuing need for improvements to provide a more reliable, cost effective and automated approach to verifying the presence of sensors.

In accordance with the present apparatus and method, detection of a sensor includes connecting an excitation signal to the sensor, disconnecting the excitation signal, connecting detection circuitry to the sensor and verifying that a response is received by the detection circuitry.

Apparatus for detecting presence of a sensor includes a signal source for providing an excitation signal for the sensor and a detector circuit. The detector circuit detects a response signal from the sensor in response to the excitation signal for presence detection. The apparatus includes a switch responsive to a control signal for switching between a first switch state coupling the signal source to the sensor and a second switch state coupling the detector circuit to the sensor. A controller provides the control signal and analyzes the detected response signal.

A method for detecting presence of a sensor includes coupling a swept frequency excitation signal to a sensor for a time interval; coupling the sensor to a detector circuit following the time interval to detect a response signal from the sensor; and analyzing the amplitude of the detected response signal to determine presence of the sensor.

In accordance with an aspect of the apparatus and method, first and second tests of the sensor are conducted with the presence of the sensor determined from the first and second tests. Parameters of the detection including gain can be changed for the first and second tests to provide a more accurate test result.

According to another aspect of the present apparatus and method, the excitation signal can be a chirp signal that spans a range of frequencies. Providing an excitation signal that spans a range of frequencies avoids having to know the actual resonant frequency of the sensor in order to generate the appropriate excitation signal,

According to another aspect, the detection circuitry includes a charge converter, a peak and hold analog detector and an analog-to-digital (A/D) converter. The controller controls the switch state and evaluates the detected signal in response to the excitation signal. The controller can also control generation of the excitation signal.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.

FIG. 1 is a schematic block diagram of an embodiment of the present apparatus coupled to a sensor.

FIG. 2 is a timing diagram illustrating operation of the apparatus of FIG. 1.

### DETAILED DESCRIPTION

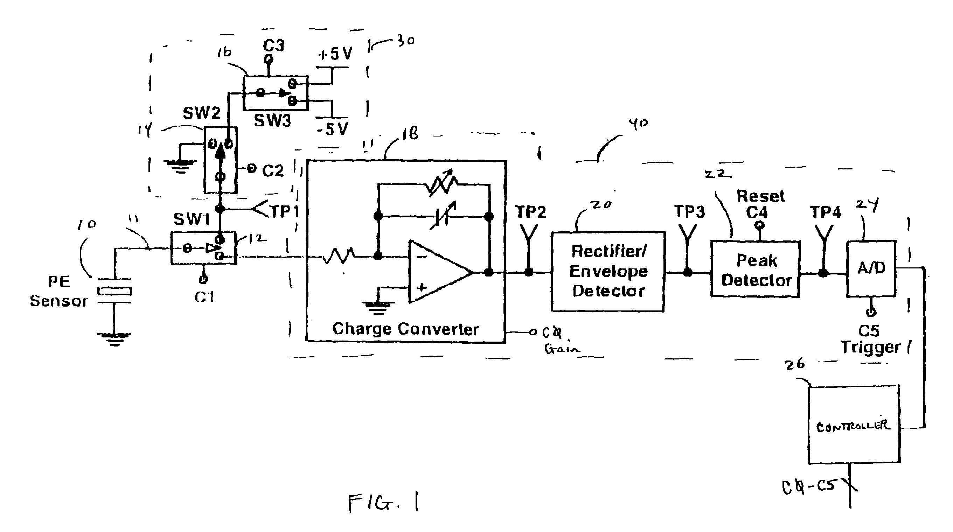

FIG. 1 shows an embodiment of the present sensor detection apparatus that can be used to detect the presence of a grounded or isolated piezo-electric (PE) sensor 10. The sensor detection apparatus includes a controller 26, a switch (SW1) 12, a signal source 30 and a detector circuit 40. The switch SW1 in one switch state connects the signal source 30 to the sensor 10 and in the other switch state connects the detector circuit 40 to the sensor 10. Control line C1 is used to control switch SW1.

The signal source 30 includes switches (SW2) 14 and (SW3) 16 that are used to generate a sensor excitation signal for injection into the PE sensor for the purpose of exciting its resonance frequency. Switch SW2 is used to minimize the possibility of unwanted noise coupling into the detector circuit 40 when connected to the PE sensor during normal operation. Switch SW3 is used to select whether +5V or -5V is being injected into the PE sensor. Control lines C2 and C3 are used to control the switches SW2 and SW3, respectively. The switches SW1, SW2, SW3 can be FET switches.

The detector circuit 40 includes a variable gain charge converter 18, a rectifier/envclope detector 20 and a peak detector 22 that detects the resonance response provided by the PE sensor after being excited by the sensor excitation signal. In an alternate embodiment, the variable gain can be provided in one or more stages following a fixed gain charge converter.

The detection circuit also includes an analog-to-digital (AID) converter 24 that is used to digitize the output of the peak detector. Control line C0 is used to control the gain of the charge converter 18. Control line C4 is used to discharge or reset the peak detector 22. Control line C5 is used to command the A/D to take a reading.

The controller 26 provides control lines C0 - C5 for controlling the elements in the signal source 30 and the detector circuit 40. The controller 26, which in an embodiment is an 8-bit microcontroller, also is programmed to conduct the sensor testing and to provide test analysis as described herein. In particular, the 8-bit microcontroller runs a sensor detection software algorithm that can reliably detect the presence of a wide range of PE sensors (e.g., 2 to 100 kHz resonant frequencies, 1 to 100 pC/g, isolated or grounded) even under the presence of large shunt cable capacitance.

The present sensor detection apparatus can be adapted for use in a signal conditioner. For example, such a sensor detection apparatus is implemented in the Endevco Model 428 signal conditioner.

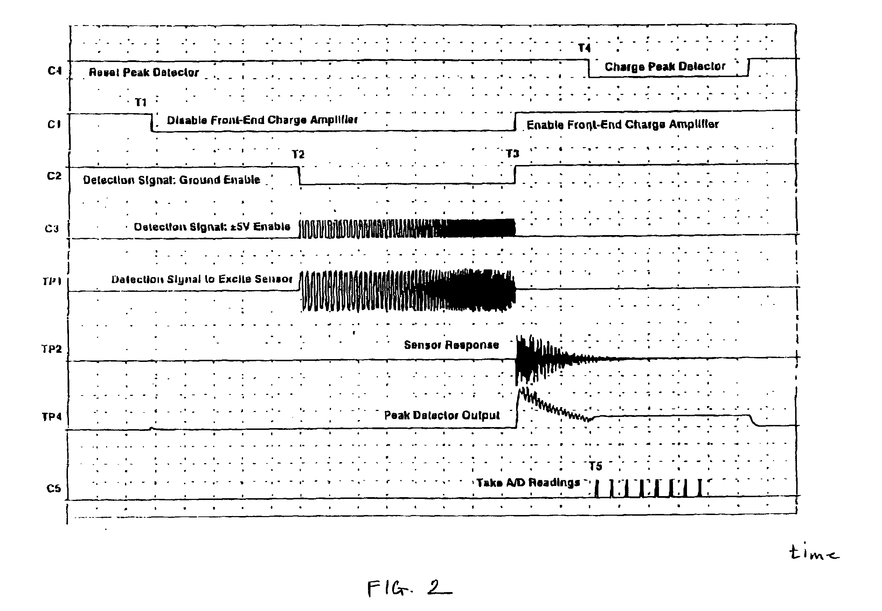

FIG. 2 shows a timing diagram for the circuitry shown in FIG. 1. The sensor detection method is now described. The signals shown in FIG. 2 include the control signals C1, C2, C3, C4, C5 and test points TP1, TP2, TP4. The time scale is shown in units of seconds.
1) At time T0 (not shown), the gain of the charge converter 18 is set to provide a total gain of 2.5 V/g by taking into account the sensor's sensitivity provided by the user. The noise floor is measured after the output TP2 of the charge converter has settled down. In an embodiment, this delay depends on the time constant selected for the charge converter. The noise floor is measured to verify that no signal or high noise is present that may be misinterpreted as a sensor response. An "unable to execute" is declared if the noise floor is measured to be higher than 25% of full scale. This is an empirically derived value. It should be understood that other noise floor threshold values can be used.
2) At time T1, the sensor output line 11 is disconnected from the charge converter of detector circuit 40 (using switch SW1 controlled by C1 in the disable state) and directed to ground (using switch SW2 controlled by C2 in the enable state), thus discharging any voltage potential build-up across the cable and sensor capacitance.
3) At time T2, the sensor output line 11 is disconnected from ground (using switch SW2 controlled by C2 in the disable state) and directed instead into switch SW3 that provides the excitation signal.
4) The chirp excitation signal is generated between tune T2 and T3 by toggling switch SW3 (controlled by C3) between +5V and -5V at varying time intervals representing a frequency sweep from about 5 kHz to about 50 kHz.
5) At time T3, the sensor output line 11 is switched back to the charge converter 18 (using switch SW1 controlled by C1 in the enable state) to receive the response signal from the sensor.
6) At time T4, the peak & hold detector 22 is enabled to charge (by using control line C4).
7) At time T5, The A/D converter 24 takes readings of the peak detector output for the controller 26 to evaluate the amplitude of the response signal. If the ratio between the measured response and the noise floor is greater than a response ratio threshold (e.g., 6 which is empirically derived), the controller declares that a PE sensor has been detected. A "no sensor detected" is declared if the ratio is less than 6 or if the response is measured to be less than 2% of full scale (empirically derived). It should be understood that other ratio values can be used.

The controller reports an "unreliable detection" to alert the user that the amplifier may have the incorrect gain setting (either too high or too low) caused possibly by the user providing the wrong sensor sensitivity.

A second detection test is done by repeating steps 1 through 7, but this time with the gain of the charge converter set to 1000 mV/pC.

The table below shows the possible outcomes from each test and the final result provided by the controller.

| **Test No. 1 Result** | **Test No. 2 Result** | **Final Conclusion** |
|---|---|---|
| Sensor Detected | Sensor Detected | Sensor Detected |
| Sensor Detected | No Sensor Detected | Unreliable Detection |
| Sensor Detected | Unable to Execute Detection | Sensor Detected |
| No Sensor Detected | Sensor Detected | Unreliable Detection |
| No Sensor Detected | No Sensor Detected | No Sensor Detected |
| No Sensor Detected | Unable to Execute Detection | No Sensor Detected |
| Unable to Execute Detection | Sensor Detected | Sensor Detected |
| Unable to Execute Detection | No Sensor Detected | No Sensor Detected |
| Unable to Execute Detection | Unable to Execute Detection | Unable to Execute Detection |

While this invention has been particularly shown and described with references to preferred embodiments thereof, it will be understood by those skilled in the art that various changes in form and details may be made therein without departing from the scope of the invention encompassed by the appended claims.

## Claims

1. Apparatus for detecting presence of a sensor, the apparatus comprising:
a signal source for providing an excitation signal for the sensor;
a detector circuit for detecting a response signal from the sensor in response to the excitation signal for presence detection;
a switch responsive to a control signal for switching between a first switch state coupling the signal source to the sensor and a second switch state coupling the detector circuit to the sensor; and
a controller for providing the control signal and for analyzing the detected response signal.

2. The apparatus of claim 1 wherein the detector circuit detects the amplitude of the response signal.

3. The apparatus of claim 1 wherein the detector circuit includes a charge converter having an input for coupling to the sensor through the switch for the second switch state, the charge converter adapted to amplify the response signal; a peak and hold detector coupled to the output of the charge converter for providing an analog peak response signal; and an analog to digital converter for converting the analog peak response signal to a digital peak response signal for analysis by the controller.

4. The apparatus of claim 1 wherein the signal source provides a multi-frequency excitation signal, and, optionally,
wherein the multi-frequency excitation signal has a sweep frequency range from about 5 kHz to about 50 kHz, or
wherein the multi-frequency excitation signal has a sweep frequency range which includes a resonant frequency of the sensor.

5. The apparatus of claim 1 wherein the controller is programmed to conduct a first test and a second test of the sensor and to determine presence of the sensor from the first and second tests, and, optionally,
wherein the detector circuit includes a variable gain charge converter for amplifying the response signal and wherein the controller is programmed to set the gain to a first level of the first test and to set the gain to a second level for the second test.

6. The apparatus of claim 1 wherein the controller controls the signal source.

7. A method for detecting presence of a sensor, the method comprising:
coupling a swept frequency excitation signal to a sensor for a time interval;
coupling the sensor to a detector circuit following the time interval to detect a response signal from the sensor; and
analyzing the amplitude of the detected response signal to determine presence of the sensor.

8. The method of claim 7 wherein the method is conducted for a first test and repeated for a second test to determine presence of the sensor from the first and second tests.

9. A method for detecting presence of a sensor, the method comprising:
coupling an excitation signal to a sensor for a first time interval;
coupling the sensor to a charge converter following the first time interval to receive a response signal from the sensor;
charging a peak and hold detector with the response signal for a second time interval to provide a response amplitude signal; and
analyzing the response amplitude signal to determine presence of the sensor.

10. The method of claim 9 wherein either
a) the method is conducted for a first test and repeated for a second test to determine presence of the sensor from the first and second tests, and, optionally,
wherein coupling the sensor to the charge converter includes setting the gain of the charge converter to a first level for the first test and setting the gain to a second level for the second test, or
b) the excitation signal is a multi-frequency excitation signal, and, optionally,
wherein the multi-frequency excitation signal has a sweep frequency range from about 5 kHz to about 50 kHz, and, further optionally,
wherein the multi-frequency excitation signal has a sweep frequency range which includes a resonant frequency of the sensor.

11. A method for detecting the presence of a sensor, the method including connecting an excitation signal to the sensor, disconnecting the excitation signal, connecting the detection circuitry to the sensor and verifying that a response is received by the detection circuitry.

12. An apparatus for detecting the presence of a sensor comprising: means arranged to connect an excitation signal to the sensor, means arranged to disconnect the excitation signal, means arranged to connect detection circuitry to the sensor and means arranged to verify that a response is received by the detection circuitry.
